# EUROPÄISCHE PATENTSCHRIFT

(11) **EP 0 725 158 B1**
(45) Veröffentlichungstag und Bekanntmachung des Hinweises auf die Patenterteilung: **16.06.1999**
(21) Anmeldenummer: 95810072.9
(22) Anmeldetag: 02.02.1995
(51) Int. Cl.: C23C 4/04

(54) **Gleitverschleissfeste Verbundbeschichtung**
Wear- and slip resistant composite coating
Revêtement composite résistant en glissement et à l'usure

(43) Veröffentlichungstag der Anmeldung: 07.08.1996
(73) Patentinhaber: SULZER INNOTEC AG, CH-8401 Winterthur (CH)
(72) Erfinder: Peters, John Antony, Dr., CH-8404 Winterthur (CH)
(74) Vertreter: Heubeck, Bernhard

(56) Entgegenhaltungen:
- EP-A- 0 622 471
- WO-A-95/02023
- DE-A- 1 771 640
- GB-A- 2 273 109
- US-A- 3 468 699
- US-A- 4 728 448
- PATENT ABSTRACTS OF JAPAN vol. 10 no. 390 (C-394) ,26.Dezember 1986 & JP-A-61 177400 (RIKEN CORP)
- PATENT ABSTRACTS OF JAPAN vol. 8 no. 230 (M-333) ,23.Oktober 1984 & JP-A-59 110702 (SHIYOUWA ARUMINIUMU) 26.Juni 1984,

## Beschreibung

Die Erfindung betrifft eine gleitverschleissfeste Verbundbeschichtung gemäss Oberbegriff von Anspruch 1.

Aus der EP-A 0 265 800 ist eine Verbundbeschichtung bekannt, bei welcher Hartstoffpartikel, nämlich Partikel von Chromkarbid oder Chromborid, in einer Matrix aus Kupfer oder einer Kupferlegierung eingebettet sind. Der Anteil der Matrix beträgt - vorzugsweise - 5 bis 15 Gew.% (Gewichtsprozent). Die Beschichtung wird beispielsweise mittels eines thermischen Spritzverfahrens hergestellt, wobei ein Spritzpulver verwendet wird, dessen Partikel sowohl Hartstoffphasen als auch Matrixmaterial umfassen. Diesem einheitlichen Spritzpulver kann auch ein weiterer pulverförmiger Stoff zugemengt werden, welcher der Schutzschicht selbstschmierende Eigenschaften vermittelt. Als Beispiel für einen derartigen Stoff wird eine Kobalt-Nickel-Legierung vorgeschlagen.

Diese bekannte Verbundbeschichtung ist beispielsweise als Laufschicht von Kolbenringen in Grossdieselmotoren verwendbar. Für ein gutes Bewegungs- und Dichtungsverhalten der Kolbenringe im Zusammenspiel mit Zylinderlaufbuchsen ist für eine optimale Wahl des Kolbenring-Laufschichtmaterials zu sorgen, wobei folgendes zu beachten ist: a) Der Verschleiss an den Ringen wie auch an den Zylinderbuchsen soll möglichst klein sein. b) Bei Vorliegen einer Mangelschmierung soll ein möglichst geringer Adhäsivverschleiss entstehen; d.h. die "Brandspurgefahr" soll klein sein oder - mit anderen Worten - die Schicht soll "brandspursicher" sein. (Die "Brandspursicherheit" entspricht dem englischen Begriff "scuff-resistance"). c) Es sollen ferner keine ermüdungsbedingte Ausbrüche entstehen. d) Schliesslich sollen hinsichtlich einer möglichen Mangelschmier-Situation ein geeigneter fester Schmierstoff in der Schicht eingelagert sein.

Es ist eine allgemeine Aufgabe der Erfindung, eine Verbundbeschichtung zu schaffen, die den bekannten Beschichtungen überlegen ist, wobei Vorteile bezüglich den genannten Erfordernissen a) bis d) gegeben sein sollen.

Es ist eine sehr widerstandsfähige Verbundbeschichtung bekannt, bei der Wolframkarbid, WC, als Hartstoff dient und die Hartstoffpartikel durch eine Matrix aus einer Kobalt-Chrom-Legierung zusammengekittet sind. Diese Matrix oder Bindelegierung hat auch eine schmierende Wirkung, die allerdings hinsichtlich Mangelschmierbedingungen nicht ausreichend ist. Es ist daher die Zumengung eines festen Schmiermittels nötig. Bei einem Versuch, Graphit als Schmiermittel zu verwenden, hat sich das Problem ergeben, dass das Chrom der Bindelegierung mit Kohlenstoff des Graphits Karbid ausbildet, das die Eigenschaften der Schicht beeinträchtigt.

Aufgabe der Erfindung ist es, eine Verbundbeschichtung zu schaffen, die neben Hartpartikeln und einer Bindelegierung Graphit als Schmierstoff enthält, wobei das genannte Problem bezüglich Karbidbildung zu lösen ist.

Aus der DE-A 1 771 640 ist ein Verfahren zur Herstellung einer gespritzten und feste Schmierstoffe enthaltenden Molybdänbeschichtung bekannt. Die Schmierstoffpartikel sind in dieser Beschichtung mit einer hitzeschützenden Metallhülle ummantelt. Mit solchen metallummantelten Partikeln lässt sich nun auch die erfindungsgemässe Aufgabe lösen.

Die Lösung dieser Aufgabe ist das beschichtete Substrat, wie es in Anspruch 1 definiert ist. Die Schutzhüllen der genannten Schmierstoffpartikel verhindern Verbindungen zwischen dem Graphit und Bestandteilen der Bindelegierung sowie der Hartstoffpartikel. Auch wenn die Schutzhüllen nicht ganz intakt sind, wird die Ausbildung der Verbindungen doch weitgehend unterbunden.

Die abhängigen Ansprüche 2 bis 6 betreffen vorteilhafte Ausführungsformen des beschichteten Substrats gemäss der Erfindung. Gegenstand der Ansprüche 7 bis 11 ist ein thermisches Spritzverfahren zur Herstellung von beschichtetem Substrat.

Um eine optimale Beschichtung herstellen zu können, muss ein Versuchsprogramm mit einer Vielzahl von Teilversuchen durchgeführt werden. Es ist dabei eine umfangreiche Mannigfaltigkeit von Parametern zu variieren. Beim beanspruchten thermischen Spritzverfahren umfasst diese Mannigfaltigkeit folgende Parameter: Zusammensetzung des Spritzpulvers, das ein Gemenge von einerseits Hartstoff/Bindelegierung-Partikeln und andererseits Schmierstoffpartikeln ist; Verhältnis zwischen Sauerstoff und Brenngas; Zufuhrrate des Pulvers; Relative Geschwindigkeit zwischen Spritzdüse und Substrat; Abstand zwischen Düse und Substrat.

Es wird gemessen, wie gross der Anteil des Spritzpulvers ist, der effektiv in die Beschichtung eingebaut wird. Der Verlust soll selbstverständlich möglichst gering ausfallen. Die gewonnenen Proben werden hinsichtlich folgender Eigenschaften untersucht: Verhältnis zwischen Hartstoff-, Bindelegierungs- und Schmiermittelphasen; Rauheit der Schichtoberfläche; Härte (Vickershärte HV_{0.3}, die ein Mass für die Eindringtiefe einer Diamantspitze unter der Last von 0.3 kg ist); Porosität.

Zur Bestimmung der Verschleissfestigkeit sind Abriebtests vorgenommen worden. Bei diesen Tests wird ein Stift unter einer vorgegebenen Last gegen eine rotierende Platte gedrückt. Die zu testende Beschichtung bildet dabei die Berührungsfläche des Stifts, und es wird die Abtragsrate gemessen. Bei diesen Tests wird auch die kritische Last bestimmt, bei der die Entstehung von "Brandspuren" einsetzt.

Gute Ergebnisse erhält man mit einem HVOF-Verfahren (HVOF = High Velocity Oxy-Fuel), d.h. mit einem thermischen Spritzverfahren, bei dem das Spritzpulver mittels eines abbrennenden Sauerstoff-Brenngas-Gemisches unter hoher Geschwindigkeit auf das Substrat aufgetragen wird. Als Brenngas wird Propan verwendet. Es wird eine 100 mm - Düse eingesetzt (Sulzer Metco CDS Standard 100 mm nozzle, CDS = Continuous Detonation Spraying).

Bei den durchgeführten Versuchen wird für das Pulvergemenge folgende Zusammensetzung gewählt: 84 Gew.% WC 10Co 4Cr (wobei die Anteile von WC, Co und Cr rund 86, 10 bzw. 4 Gew.% betragen) und 16 Gew.% Ni 25C_{Graphit} (= Graphit-Partikel mit Nickelhüllen, wobei der Kohlenstoff-Anteil 25 Gew.% beträgt).

Mit einer besonderen statistischen Methode ("fractional factorial experimental design", siehe z.B. W.G.Hunter, J.S.Hunter "Statistics for Experimenters - An Introduction to Design, Data Analysis and Model Building" J.Wiley & Sons, 1978) ist es möglich, mit einer Versuchsreihe von lediglich 8 Tests Werte für die Parameter zu finden, für welche eine angenähert optimale Beschichtung zu erwarten ist. Man hat nach dieser Methode folgende Werte erhalten:

Verhältnis zwischen Sauerstoff und Brenngas = 7.0; Zufuhrrate des Pulvers = 35 g/min; Relativgeschwindigkeit zwischen Spritzdüse und Substrat = 72 m/min; Abstand zwischen Düse und Substrat 250 mm.

Dieser Parameterwahl sind folgende Messwerte zugeordnet: Verlust an Spritzpulver = 26 % (d.h. Auftragsrate 74 %); Vickershärte HV_{0.3} = 859; Anteil der Graphit-Phase = 8 Volumenprozent (Wert geschätzt aufgrund von Messungen mit Röntgenstrahlen); Verhältnis von WC und W₂C = 5.2 (Schätzung wie beim Graphit). Der Abriebtest mit Stift und rotierender Scheibe zeigt bei Raumtemperatur einen einsetzenden Adhäsivverschleiss ("Brandspur") bei 88 N/mm². Der entsprechende Wert bei 220°C beträgt 59 N/mm². Diese Werte sind um rund 20 % besser als jene für eine entsprechende Beschichtung mit 100 % WC 10Co 4Cr, d.h. bei Fehlen der Schmiermittelkomponente.

Bei dem thermischen Spritzverfahren wird ein Teil des WC in W₂C umgewandelt. Diese Umwandlung hat einen negativen Einfluss auf die Abriebfestigkeit der Hartstoffphase. Es hat sich gezeigt, dass ein Teil des Graphits während des Aufspritzens in die Dampfphase übergeht. Der verdampfte Kohlensstoff übt vorteilhafterweise eine mässigende Wirkung auf die Umwandlung des WC aus, indem die Erzeugung des ungünstigen W₂C behindert wird.

Nachfolgend werden weitere Details der Erfindung anhand der Zeichnungen erläutert. Es zeigen:
- Fig. 1: einen schematisch dargestellten Schnitt durch eine erfindungsgemässe Beschichtung,
- Fig. 2: ein Ni 25C_{Graphit}-Partikel mit einer weggeschliffenen Seitenfläche und
- Fig. 3: ein WC 10Co 4Cr-Partikel, ebenfalls mit weggeschliffener Seitenfläche.

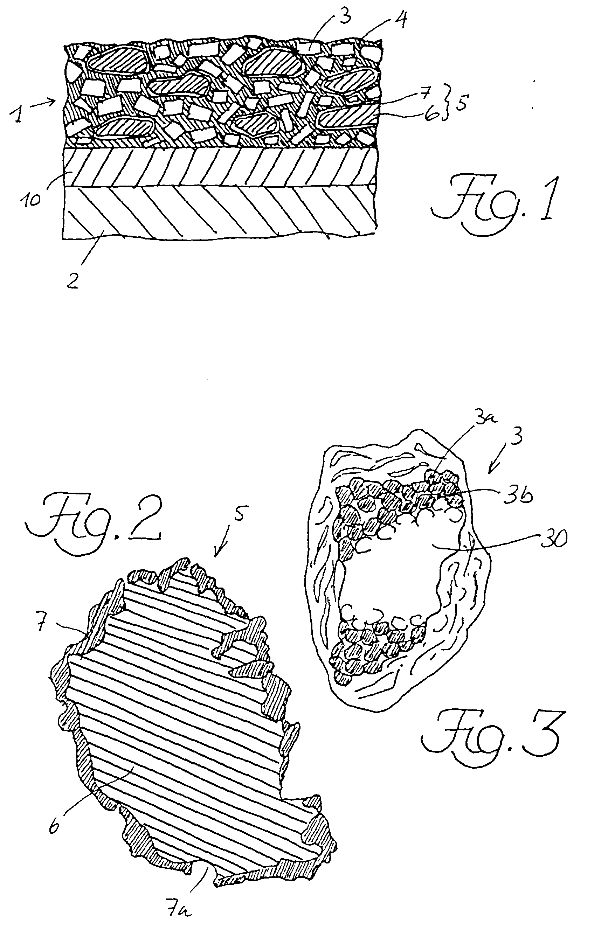

Die gleitverschleissfeste Verbundbeschichtung 1 der Fig.1 ist über eine Zwischenschicht 10 mit einem Substrat 2 verbunden. Die Verbundbeschichtung 1 besteht aus einem Gemisch von Hartstoffpartikeln 3 (zu gross gezeichnet) und Partikeln 5, die einen festen Schmierstoff enthalten. Die Partikel 3 und 4 sind in einer Bindelegierung 4 eingebettet. Die Partikel 5 - vgl. Fig.2 - setzen sich jeweils aus einem Schmierstoffpartikel 6 und einer Schutzhülle 7 zusammen. Die Zwischenschicht 10 ist frei von Schmierstoffpartikeln. Sie bewirkt eine gute Haftung der Schicht 1 auf dem Substrat 2. Auf eine Zwischenschicht 10 kann in vielen Fällen auch verzichtet werden.

In dem konkret vorliegenden Fall der Fig.2 wird der Schmierstoff durch Graphitpartikel 6 gebildet, die plättchenförmig sind und die einen Durchmesser im Bereich zwischen rund 10 und 30 µm sowie eine Höhe im Bereich zwischen rund 5 und 10 µm aufweisen. Die Hülle 7 (hergestellt mit einem sogenannten "Sherritt Gordon-Verfahren") besteht aus Nickel und umfasst rund 75 % der Masse des gesamten Partikels 5. Die Schutzhüllen 7 der Graphitpartikel 6 können ganz allgemein jeweils aus einer metallischen Phase gebildet sein, deren Metalle keine Karbide bilden, wobei als Metalle insbesondere Co, Ni, Cu und/oder Mo in Frage kommen. Die Hüllen 7 können auch Lücken 7a aufweisen, durch die während der Durchführung des thermischen Spritzverfahrens eine geringe Menge an Kohlenstoff in die Dampfphase übergeht.

Die Schmiermittelpartikel müssen homogen in der Schicht verteilt sein. Die Graphitphase soll höchstens 20 Vol.% umfassen, damit keine wesentliche Schwächung der Schicht entsteht. Die Anwesenheit der Graphitphase verbessert die Bearbeitbarkeit der Schichtoberfläche.

Es wird ein Ni 25C_{Graphit}-Pulver verwendet, dessen Partikel eine Grössenverteilung aufweisen, die durch folgende Siebanalyse charakterisierbar ist: -88 +44µm (d.h. 5% gröber als 88µm, 2% feiner als 44µm).

Fig.3 zeigt im gleichen Massstab wie Fig.2 ein angeschliffenes Pulverkorn (Anschlifffläche 30), das sich aus Hartstoffpartikeln 3a (WC) und Bindelegierung 3b (10Co 4Cr) zusammensetzt. Die Bindelegierung 3b bildet eine Matrix, die aus Co sowie Cr besteht, wobei der gewichtsbezogene Anteil von Co um den Faktor 2.5 grösser als jener von Cr ist. Diese Matrix ist porenarm ist und weist einen inhärent guten Verschleisswiderstand auf. Anstelle der genannten Zusammensetzung kann auch eine andere gewählt werden; die Matrix kann beispielsweise aus Co, CoCr, Mo oder einer Mischung dieser Stoffe bestehen. Die Hartstoffphase kann gebildet werden durch Karbide, Nitride oder Karbonitride der Metalle W, Cr, Ti, Ta, Mo, Nb, Zr, Hf und V.

Die Pulverteilchen 3, welche die Hartstoff- und Bindelegierungsphasen enthalten, können durch Sintern der Bestandteile und anschliessendes Zerkleinern des gesinterten Produkts erzeugt werden. Die Partikelgrössen des verwendeten Pulvers ist durch folgende Siebanalyse charakterisierbar: -45 +11µm.

## Patentansprüche

1. Beschichtetes Substrat mit einer durch thermisches Spritzen aufgebrachten Verbundbeschichtung (1), die ein Gemisch von homogen verteilten, in einer Bindelegierung (4) eingebettete Hartstoffpartikel (3) und zu einem Anteil von 10 bis 20 Gew.% umhüllte Schmierstoffpartikel (5) enthält, die jeweils aus Graphit (6) und einer Schutzhülle (7) aus einer metallischen Phase bestehen, wobei die Schutzhülle Verbindungen zwischen dem Graphit (6) einerseits und Bestandteilen der Bindelegierung (4) sowie der Hartstoffpartikel (3) andererseits weitgehend verhindern, die Bindelegierung (4) und/oder die Hartstoffpartikel (3) karbidbildende Bestandteile enthalten, die Metalle der Schutzhüllen keine Karbide bilden und die Bindelegierung (4) eine Phase bildet, die porenarm ist sowie inhärent einen guten Verschleisswiderstand aufweist.

2. Beschichtetes Substrat nach Anspruch 1, dadurch gekennzeichnet, dass die umhüllten Schmierstoffpartikel (5) rund 25 Gew.% Graphit (6) enthalten und dass die Metalle der Schutzhüllen (7) Co, Ni, Cu und/oder Mo sind.

3. Beschichtetes Substrat nach Anspruch 1 oder 2, dadurch gekennzeichnet, dass und die Bindelegierung (4) aus Co, CoCr, Mo oder einer Mischung dieser Stoffe besteht.

4. Beschichtetes Substrat nach Anspruch 3, dadurch gekennzeichnet, dass die Bindelegierung (4) aus Co sowie Cr besteht und der gewichtsbezogene Anteil von Co rund 2 bis 3 Mal grösser als jener von Cr ist.

5. Beschichtetes Substrat nach einem der Ansprüche 1 bis 4, dadurch gekennzeichnet, dass die Hartstoffpartikel (3) Karbide, Nitride und/oder Karbonitride der Metalle W, Cr, Ti, Nb, Zr, Hf, Ta und/oder Mo enthalten.

6. Beschichtetes Substrat nach einem der Ansprüche 1 bis 5, dadurch gekennzeichnet, dass zwischen dem Substrat und der Beschichtung (1) eine Verbindungsschicht (10) angeordnet ist, die keine Schmierstoffpartikel (5) enthält.

7. Thermisches Spritzverfahren zum Herstellen einer Beschichtung auf einem Substrat nach einem der Ansprüche 1 bis 5,
dadurch gekennzeichnet, dass als Spritzpulver ein Gemisch verwendet wird, das einerseits die umhüllten Schmierstoffpartikel (5) umfasst und andererseits Teilchen, die sowohl die Hartstoffpartikel (3) als auch die Bindelegierung (4) enthalten.

8. Verfahren nach Anspruch 7, dadurch gekennzeichnet, dass das Pulvergemenge mittels eines HVOF-Verfahrens auf das Substrat aufgetragen wird, wobei das Pulvergemenge mittels eines abbrennenden Sauerstoff-Brenngas-Gemisches unter hoher Geschwindigkeit gespritzt wird.

9. Verfahren nach Anspruch 7 oder 8, dadurch gekennzeichnet, dass die Schmiermittelpartikel (5) eine Hülle aus Ni aufweisen sowie plättchenförmig sind und dass die Plättchen (5) jeweils einen Durchmesser im Bereich zwischen rund 10 und 30 µm sowie eine Höhe im Bereich zwischen rund 5 und 10 µm aufweisen.

10. Verfahren nach den Ansprüchen 9 und 10, dadurch gekennzeichnet, dass als Brenngas Propan verwendet wird und dass für das Verhältnis von Sauerstoff zu Propan ein Wert im Bereich zwischen rund 5 und 10 gewählt wird.

11. Verfahren nach einem der Ansprüchen 8 bis 11, dadurch gekennzeichnet, dass die Pulverteilchen, welche die Hartstoff- und Bindelegierungsphasen enthalten, durch Sintern der Bestandteile und anschliessendem Zerkleinern des gesinterten Produkts erzeugt werden, wobei die Anteile von WC, Co und Cr rund 86, 10 bzw. 4 Gew.% betragen.

## Claims

1. Coated substrate having a composite coating (1) applied by thermal spraying which contains a mixture of homogenously distributed hard material particles (3) embedded in a binder alloy and encased lubricant particles (5) in a proportion of 10 to 20 % by weight, which each consist of graphite (6) and a protective envelope (7) of a metallic phase, with the protective envelope (7) largely preventing bonds between the graphite (6), on the one hand, and components of the binder alloy (4) as well as of the hard material particles (3), on the other hand, with the binder alloy (4) and/or the hard material particles (3) containing carbide forming components, the metals of these protective envelopes being non-carbide forming and with the binder alloy (4) forming a phase which is low in pores and inherently has a good wear resistance.

2. Coated substrate in accordance with claim 1, characterized in that the encased lubricant particles (5) contain about 25 % by weight of graphite (6) and in that the metals of the protective envelopes (7) are Co, Ni, Cu and/or Mo.

3. Coated substrate in accordance with claim 1 or claim 2, characterized in that the binder alloy (4) is made of Co, CoCr, Mo or a mixture of these materials.

4. Coated substrate in accordance with claim 3, characterized in that the binder alloy (4) is made of Co as well as Cr and in that the proportion by weight of Co is approximately 2 to 3 times larger than that of Cr.

5. Coated substrate in accordance with one of the claims 1 to 4, characterized in that the hard material particles (3) contain carbides, nitrides and/or carbonitrides of the metals W, Cr, Ti, Nb, Zr, Hf, Ta and/or Mo.

6. Coated substrate in accordance with one of the claims 1 to 5, characterized in that a bonding layer (10) containing no lubricant particles (5) is arranged between the substrate and the coating (1).

7. Thermal spray process for the production of a coating on a substrate in accordance with one of the claims 1 to 5, characterized in that a mixture is used for the spray powder which, on the one hand, includes encased lubricant particles (5) and, on the other hand, particles containing both the hard material particles as well as the binder alloy.

8. Process in accordance with claim 7, characterized in that the powder mixture is applied onto the substrate by means of a HVOF-process with the powder mixture being sprayed at high speed by means of a burning-off oxygen and fuel gas mixture.

9. Process in accordance with claim 7 or claim 8, characterized in that the lubricant particles have a Ni envelope and are also platelet-shaped and in that the platelets each have a diameter in the range of between approximately 10 and 30 µm and a height in the range between approximately 5 and 10 µm.

10. Process in accordance with the claims 9 and 10, characterized in that propane is used as the fuel gas and in that a value in the range of between approximately 5 and 10 is selected for the proportion of oxygen to propane.

11. Process in accordance with one of the claims 8 to 11, characterized in that the powder particles containing hard material phases and binder alloy phases are produced by sintering of the components and subsequent comminution of the sintered product, with the proportion of WC, Co and Cr amounting to around 86, 10 and 4 weight percent respectively.

## Revendications

1. Support revêtu par un revêtement composite (1) appliqué par pulvérisation thermique, qui comporte un mélange de particules de matière dure (3) réparties d'une manière homogène, noyées dans un alliage de liaison (4) et des particules de lubrifiant (5) enveloppées en une part de 10 à 20% en poids qui sont constituées respectivement de graphite (6) et d'une enveloppe de protection (7) en une phase métallique, où l'enveloppe de protection empêche dans une grande mesure des liaisons entre le graphite (6), d'une part, et des constituants de l'alliage de liaison (4) ainsi que des particules de matière dure (3), d'autre part, où l'alliage de liaison (4) et/ou les particules de matière dure (3) comportent des composants générateurs de carbure, les métaux des enveloppes de protection ne forment pas de carbures et l'alliage de liaison (4) forme une phase qui est pauvre en pores et qui a d'une manière inhérente une bonne résistance à l'usure.

2. Support revêtu selon la revendication 1, caractérisé en ce que les particules de lubrifiant enveloppées (5) comportent environ 25% en poids de graphite (6) et que les métaux des enveloppes de protection (7) sont Co, Ni, Cu et/ou Mo.

3. Support revêtu selon la revendication 1 ou 2, caractérisé en ce que l'alliage de liaison (4) est constitué de Co, CoCr, de Mo ou d'un mélange de ces matières.

4. Support revêtu selon la revendication 3, caractérisé en ce que l'alliage de liaison (4) est constitué de Co ainsi que de Cr et que la part se rapportant au poids de Co est environ 2 à 3 fois plus grande que celle de Cr.

5. Support revêtu selon l'une des revendications 1 à 4, caractérisé en ce que les particules de matière dure (3) comportent des carbures, nitrures et/ou nitrures de carbone des métaux W, Cr, Ti, Nb, Zr, Hf, Ta et/ou Mo.

6. Support revêtu selon l'une des revendications 1 à 5, caractérisé en ce qu'il est disposé entre le support et le revêtement (1) une couche de liaison (10) qui ne comporte pas de particules de lubrifiant (5).

7. Procédé de pulvérisation thermique pour la fabrication d'un revêtement sur un support selon l'une des revendications 1 à 5, caractérisé en ce qu'il est utilisé comme poudre de pulvérisation un mélange qui comporte, d'une part, les particules de lubrifiant enveloppées (5) et, d'autre part, des particules qui contiennent à la fois les particules de matière dure (3) et l'alliage de liaison (4).

8. Procédé selon la revendication 7, caractérisé en ce que le mélange de poudre est appliqué par un procédé HVOF sur le support, où le mélange de poudre est pulvérisé au moyen d'un mélange calcinant d'oxygène et de gaz de combustion à vitesse élevée.

9. Procédé selon la revendication 7 ou 8, caractérisé en ce que les particules de lubrifiant (5) présentent une enveloppe en Ni et sont en forme de plaquette, et que les plaquettes (5) ont respectivement un diamètre dans la plage comprise entre environ 10 et 30µm ainsi qu'une hauteur dans la plage comprise entre environ 5 et 10µm.

10. Procédé selon les revendications 9 et 10, caractérisé en ce qu'on utilise comme gaz de combustion du propane et qu'on choisit pour le rapport d'oxygène à propane une valeur dans la plage comprise entre environ 5 et 10.

11. Procédé selon l'une des revendications 8 à 11, caractérisé en ce que les particules de poudre qui comportent les phases de matière dure et les phases d'alliage de liaison sont produites par frittage des composants et d'un fractionnement subséquent du produit fritté, où les parts de WC, Co et Cr représentent environ 86, 10 respectivement 4% en poids.
